# EUROPEAN PATENT APPLICATION

(11) **EP 4 749 463 A1**
(43) Date of publication of application: **27.05.2026**
(21) Application number: 25217366.1
(22) Date of filing: 20.11.2025
(51) Int. Cl.: G06F 11/20

(54) **TECHNIQUES FOR ADAPTIVE REPLICATION FACTORS FOR A COMPUTING CLUSTER**

(30) Priority: 21.11.2024 US 202418955145
(71) Applicant: Nutanix, Inc., San Jose, California 95110 (US)
(72) Inventor: MENON, Anoop, San Jose, 95110 (US); TATIPARTHI, Kiran, San Jose, 95110 (US); KONKA, Pavan Kumar, San Jose, 95110 (US); SINHA, Prakhar, San Jose, 95110 (US); SHAH, Shubh Pragnesh, San Jose, 95110 (US); KAMBLE, Snehal Sharadchandra, San Jose, 95110 (US); MEMON, Tabrez Parvez, San Jose, 95110 (US)
(74) Representative: Mathys & Squire

(57) **Abstract**

Techniques for adaptive replication factors for a computing cluster include one or more computer program products storing program instructions that, when executed by one or more processors associated with a first node in an N-node cluster, cause the one or more processors to perform a method comprising setting a replication factor for the cluster to N, and in response to detecting a failure of a second node in the cluster, setting the replication factor for the cluster to N-1.

## Description

### BACKGROUND

### Field of the Various Embodiments

Embodiments of the present disclosure are directed to data storage technologies for computing clusters that are resilient to both node and drive failures and more specifically to techniques for adaptive replication factors for a computing cluster.

### Description of the Related Art

Fault tolerance is the ability of a storage cluster to continue operating properly when one or more components of the cluster (such as nodes, disks, etc.) fail. In a storage cluster, the fault tolerance is typically implemented by keeping replicas of data blocks stored in the cluster so that backup copies of the data blocks are available when one or more copies of the data blocks are no longer available. A replication factor defines the number of replicas of each data block that are stored across different nodes or storage devices of the cluster. For example, a replication factor of two (RF2) can be used in a three-node cluster that provides a fault tolerance of one (FT1) (e.g., at most one node or one drive failure can be handled without loss of data). As another example, a replication factor of three (RF3) in a five-node cluster provides a fault tolerance of two (FT2) (e.g., at most two failures in nodes and/or drives can occur without loss of data).

In conventional storage clusters, in order for an N-node cluster to maintain the replication factor of N (RF_N) when a node failure occurs, the cluster has to maintain sufficient spare capacity equivalent to one entire node so that the data stored at the failed node can be completely rebuilt. Similarly, in the N-node cluster to maintain the replication factor of N-1 (RF_N-1) when two node failures occur, the cluster has to maintain sufficient spare capacity equivalent to the data stored at two entire nodes.

One drawback of conventional techniques is the significant amount of spare capacity that has to be provisioned in the cluster to rebuild a node when a node failure occurs. In addition, even with the extra spare capacity, the above mentioned three-node cluster is not able to simultaneously support the failure of both a node and a disk. Another drawback of the conventional techniques is that at the time of a node failure in the cluster, the cluster loses write capability until the data stored at the failed node has been rebuilt or until a new node is added to the cluster or the previous node becomes available.

As the foregoing indicates, what is needed in the art are more effective techniques for supporting node and drive failures in a computing cluster.

### SUMMARY

In various embodiments, one or more computer program products storing program instructions that, when executed by one or more processors associated with a first node in an N-node cluster, cause the one or more processors to perform a method comprising setting a replication factor for the cluster to N, and in response to detecting a failure of a second node in the cluster, setting the replication factor for the cluster to N-1. The one or more computer program products may comprise non-transitory computer readable media or may include a signal that is obtained from a server or the like.

Further embodiments provide, among other things, methods and systems for implementing one or more aspects of the disclosed techniques.

At least one technical advantage of the disclosed techniques relative to the prior art is that, with the disclosed techniques an N-node cluster is able to handle both a node and a drive failure without a need to have spare capacity equal to an entire node. In addition, the disclosed techniques retain the ability to continuously handle write requests when a node of the cluster fails. These technical advantages provide one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, can be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIGs. 1A-1D are block diagrams illustrating virtualization system architectures configured to implement one or more aspects of the various embodiments;
FIG. 2 is a block diagram illustrating a computing system configured to implement one or more aspects of the various embodiments;
FIG. 3 is a more detailed illustration of filesystem module of FIG. 2, according to various embodiments;
FIG. 4 is a flow diagram of method steps for handling a write request in a cluster, according to various embodiments;
FIG. 5 is a flow diagram of method steps for handling a node failure in a cluster, according to various embodiments; and
FIG. 6 is a flow diagram of method steps for handling a disk failure in a cluster, according to various embodiments.

### DETAILED DESCRIPTION

In the following description, various concepts and examples are disclosed that provide more effective techniques for accessing business data using executable code included in authorization identifiers. The numerous specific details set forth will provide artisans with a more thorough understanding of the various embodiments. However, it will be apparent to one skilled in the art that the inventive concepts can be practiced without one or more of these specific details.

### Exemplary Virtualization System Architectures

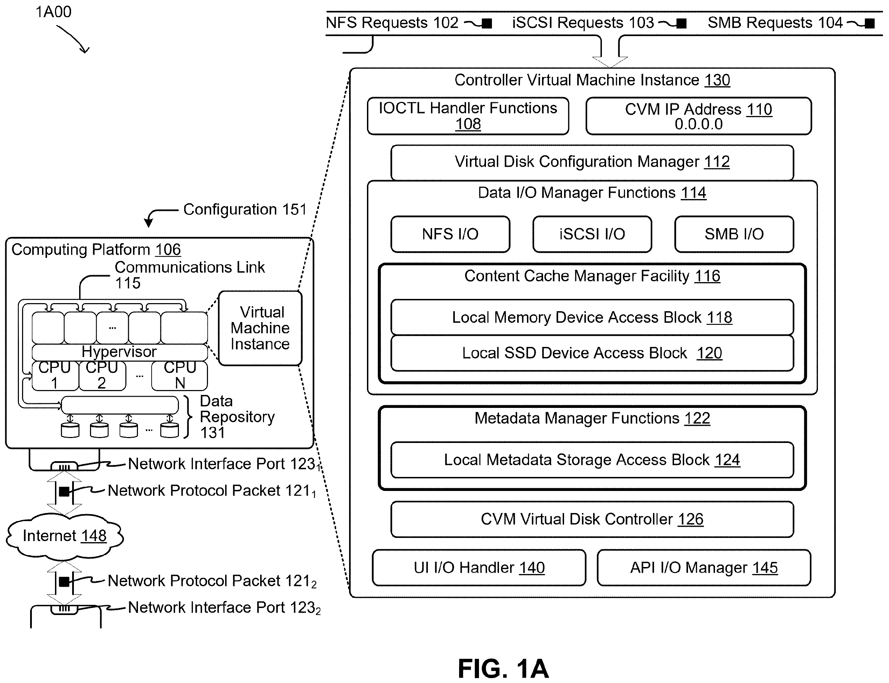

According to some embodiments, all or portions of any of the disclosed techniques can be partitioned into one or more modules and instances within, or as, or in conjunction with a virtualized controller in a virtual computing environment. Some example instances within various virtual computing environments are shown and discussed in further detail in FIGs. 1A-1D. Consistent with these embodiments, a virtualized controller includes a collection of software instructions that serve to abstract details of underlying hardware or software components from one or more higher-level processing entities. In some embodiments, a virtualized controller can be implemented as a virtual machine, as an executable container, or within a layer (e.g., such as a layer in a hypervisor). Consistent with these embodiments, distributed systems include collections of interconnected components that are designed for, or dedicated to, storage operations as well as being designed for, or dedicated to, computing and/or networking operations.

In some embodiments, interconnected components in a distributed system can operate cooperatively to achieve a particular objective such as to provide high-performance computing, high-performance networking capabilities, and/or high-performance storage and/or high-capacity storage capabilities. For example, a first set of components of a distributed computing system can coordinate to efficiently use a set of computational or compute resources, while a second set of components of the same distributed computing system can coordinate to efficiently use the same or a different set of data storage facilities.

In some embodiments, a hyperconverged system coordinates the efficient use of compute and storage resources by and between the components of the distributed system. Adding a hyperconverged unit to a hyperconverged system expands the system in multiple dimensions. As an example, adding a hyperconverged unit to a hyperconverged system can expand the system in the dimension of storage capacity while concurrently expanding the system in the dimension of computing capacity and also in the dimension of networking bandwidth. Components of any of the foregoing distributed systems can comprise physically and/or logically distributed autonomous entities.

In some embodiments, physical and/or logical collections of such autonomous entities can sometimes be referred to as nodes. In some hyperconverged systems, compute and storage resources can be integrated into a unit of a node. Multiple nodes can be interrelated into an array of nodes, which nodes can be grouped into physical groupings (e.g., arrays) and/or into logical groupings or topologies of nodes (e.g., spoke-and-wheel topologies, rings, etc.). Some hyperconverged systems implement certain aspects of virtualization. For example, in a hypervisor-assisted virtualization environment, certain of the autonomous entities of a distributed system can be implemented as virtual machines. As another example, in some virtualization environments, autonomous entities of a distributed system can be implemented as executable containers. In some systems and/or environments, hypervisor-assisted virtualization techniques and operating system virtualization techniques are combined.

FIG. 1A is a block diagram illustrating virtualization system architecture 1A00 configured to implement one or more aspects of the various embodiments. As shown in FIG. 1A, virtualization system architecture 1A00 includes a collection of interconnected components, including a controller virtual machine (CVM) instance 130 in a configuration 151. Configuration 151 includes a computing platform 106 that supports virtual machine instances that are deployed as user virtual machines, or controller virtual machines or both. Such virtual machines interface with a hypervisor (as shown). In some examples, virtual machines can include processing of storage I/O (input/output or IO) as received from any or every source within the computing platform. An example implementation of such a virtual machine that processes storage I/O is depicted as CVM instance 130.

In this and other configurations, a CVM instance receives block I/O storage requests as network file system (NFS) requests in the form of NFS requests 102, internet small computer storage interface (iSCSI) block IO requests in the form of iSCSI requests 103, Samba file system (SMB) requests in the form of SMB requests 104, and/or the like. The CVM instance publishes and responds to an internet protocol (IP) address (e.g., CVM IP address 110). Various forms of input and output can be handled by one or more IO control handler functions (e.g., IOCTL handler functions 108) that interface to other functions such as data IO manager functions 114 and/or metadata manager functions 122. As shown, the data IO manager functions can include communication with virtual disk configuration manager 112 and/or can include direct or indirect communication with any of various block IO functions (e.g., NFS IO, iSCSI IO, SMB IO, etc.).

In addition to block IO functions, configuration 151 supports IO of any form (e.g., block IO, streaming IO, packet-based IO, HTTP traffic, etc.) through either or both of a user interface (UI) handler such as UI IO handler 140 and/or through any of a range of application programming interfaces (APIs), possibly through API IO manager 145.

Communications link 115 can be configured to transmit (e.g., send, receive, signal, etc.) any type of communications packets comprising any organization of data items. The data items can comprise a payload data, a destination address (e.g., a destination IP address) and a source address (e.g., a source IP address), and can include various packet processing techniques (e.g., tunneling), encodings (e.g., encryption), formatting of bit fields into fixed-length blocks or into variable length fields used to populate the payload, and/or the like. In some cases, packet characteristics include a version identifier, a packet or payload length, a traffic class, a flow label, etc. In some cases, the payload comprises a data structure that is encoded and/or formatted to fit into byte or word boundaries of the packet.

In some embodiments, hard-wired circuitry can be used in place of, or in combination with, software instructions to implement aspects of the disclosure. Thus, embodiments of the disclosure are not limited to any specific combination of hardware circuitry and/or software. In embodiments, the term "logic" shall mean any combination of software or hardware that is used to implement all or part of the disclosure.

Computing platform 106 includes one or more computer readable media that is capable of providing instructions to a data processor for execution. In some examples, each of the computer readable media can take many forms including, but not limited to, non-volatile media and volatile media. Non-volatile media includes any non-volatile storage medium, for example, solid state storage devices (SSDs) or optical or magnetic disks such as hard disk drives (HDDs) or hybrid disk drives, or random-access persistent memories (RAPMs) or optical or magnetic media drives such as paper tape or magnetic tape drives. Volatile media includes dynamic memory such as random-access memory (RAM). As shown, controller virtual machine instance 130 includes content cache manager facility 116 that accesses storage locations, possibly including local dynamic random-access memory (DRAM) (e.g., through local memory device access block 118) and/or possibly including accesses to local solid-state storage (e.g., through local SSD device access block 120).

Common forms of computer readable media include any non-transitory computer readable medium, for example, floppy disk, flexible disk, hard disk, magnetic tape, or any other magnetic medium; CD-ROM or any other optical medium; punch cards, paper tape, or any other physical medium with patterns of holes; or any RAM, PROM, EPROM, FLASH-EPROM, or any other memory chip or cartridge. Any data can be stored, for example, in any form of data repository 131, which in turn can be formatted into any one or more storage areas, and which can comprise parameterized storage accessible by a key (e.g., a filename, a table name, a block address, an offset address, etc.). Data repository 131 can store any forms of data and can comprise a storage area dedicated to storage of metadata pertaining to the stored forms of data. In some cases, metadata can be divided into portions. Such portions and/or cache copies can be stored in the storage data repository and/or in a local storage area (e.g., in local DRAM areas and/or in local SSD areas). Such local storage can be accessed using functions provided by local metadata storage access block 124. The data repository 131 can be configured using CVM virtual disk controller 126, which can in turn manage any number or any configuration of virtual disks.

Execution of a sequence of instructions to practice certain of the disclosed embodiments is performed by one or more instances of a software instruction processor, or a processing element such as a data processor, or such as a central processing unit (e.g., CPU1, CPU2, ..., CPUN). According to certain embodiments of the disclosure, two or more instances of configuration 151 can be coupled by communications link 115 (e.g., backplane, LAN, PSTN, wired or wireless network, etc.) and each instance can perform respective portions of sequences of instructions as can be required to practice embodiments of the disclosure.

The shown computing platform 106 is interconnected to the Internet 148 through one or more network interface ports (e.g., network interface port 123₁ and network interface port 123₂). Configuration 151 can be addressed through one or more network interface ports using an IP address. Any operational element within computing platform 106 can perform sending and receiving operations using any of a range of network protocols, possibly including network protocols that send and receive packets (e.g., network protocol packet 121₁ and network protocol packet 121₂).

Computing platform 106 can transmit and receive messages that can be composed of configuration data and/or any other forms of data and/or instructions organized into a data structure (e.g., communications packets). In some cases, the data structure includes program instructions (e.g., application code) communicated through the Internet 148 and/or through any one or more instances of communications link 115. Received program instructions can be processed and/or executed by a CPU as it is received and/or program instructions can be stored in any volatile or non-volatile storage for later execution. Program instructions can be transmitted via an upload (e.g., an upload from an access device over the Internet 148 to computing platform 106). Further, program instructions and/or the results of executing program instructions can be delivered to a particular user via a download (e.g., a download from computing platform 106 over the Internet 148 to an access device).

Configuration 151 is merely one example configuration. Other configurations or partitions can include further data processors, and/or multiple communications interfaces, and/or multiple storage devices, etc. within a partition. For example, a partition can bound a multi-core processor (e.g., possibly including embedded or collocated memory), or a partition can bound a computing cluster having a plurality of computing elements, any of which computing elements are connected directly or indirectly to a communications link. A first partition can be configured to communicate to a second partition. A particular first partition and a particular second partition can be congruent (e.g., in a processing element array) or can be different (e.g., comprising disjoint sets of components).

A cluster is often embodied as a collection of computing nodes that can communicate between each other through a local area network (e.g., LAN or virtual LAN (VLAN)) or a backplane. Some clusters are characterized by assignment of a particular set of the aforementioned computing nodes to access a shared storage facility that is also configured to communicate over the local area network or backplane. In many cases, the physical bounds of a cluster are defined by a mechanical structure such as a cabinet or such as a chassis or rack that hosts a finite number of mounted-in computing units. A computing unit in a rack can take on a role as a server, or as a storage unit, or as a networking unit, or any combination therefrom. In some cases, a unit in a rack is dedicated to provisioning of power to other units. In some cases, a unit in a rack is dedicated to environmental conditioning functions such as filtering and movement of air through the rack and/or temperature control for the rack. Racks can be combined to form larger clusters. For example, the LAN of a first rack having a quantity of 32 computing nodes can be interfaced with the LAN of a second rack having 16 nodes to form a two-rack cluster of 48 nodes. The former two LANs can be configured as subnets, or can be configured as one VLAN. Multiple clusters can communicate between one module to another over a WAN (e.g., when geographically distal) or a LAN (e.g., when geographically proximal).

In some embodiments, a module can be implemented using any mix of any portions of memory and any extent of hard-wired circuitry including hard-wired circuitry embodied as a data processor. Some embodiments of a module include one or more special-purpose hardware components (e.g., power control, logic, sensors, transducers, etc.). A data processor can be organized to execute a processing entity that is configured to execute as a single process or configured to execute using multiple concurrent processes to perform work. A processing entity can be hardware-based (e.g., involving one or more cores) or software-based, and/or can be formed using a combination of hardware and software that implements logic, and/or can carry out computations and/or processing steps using one or more processes and/or one or more tasks and/or one or more threads or any combination thereof.

Some embodiments of a module include instructions that are stored in a memory for execution so as to facilitate operational and/or performance characteristics pertaining to management of block stores. Various implementations of the data repository comprise storage media organized to hold a series of records and/or data structures.

Further details regarding general approaches to managing data repositories are described in U.S. Patent No. 8,601,473 titled "ARCHITECTURE FOR MANAGING I/O AND STORAGE FOR A VIRTUALIZATION ENVIRONMENT," issued on December 3, 2013, which is hereby incorporated by reference in its entirety.

Further details regarding general approaches to managing and maintaining data in data repositories are described in U.S. Patent No. 8,549,518 titled "METHOD AND SYSTEM FOR IMPLEMENTING A MAINTENANCE SERVICE FOR MANAGING I/O AND STORAGE FOR A VIRTUALIZATION ENVIRONMENT," issued on October 1, 2013, which is hereby incorporated by reference in its entirety.

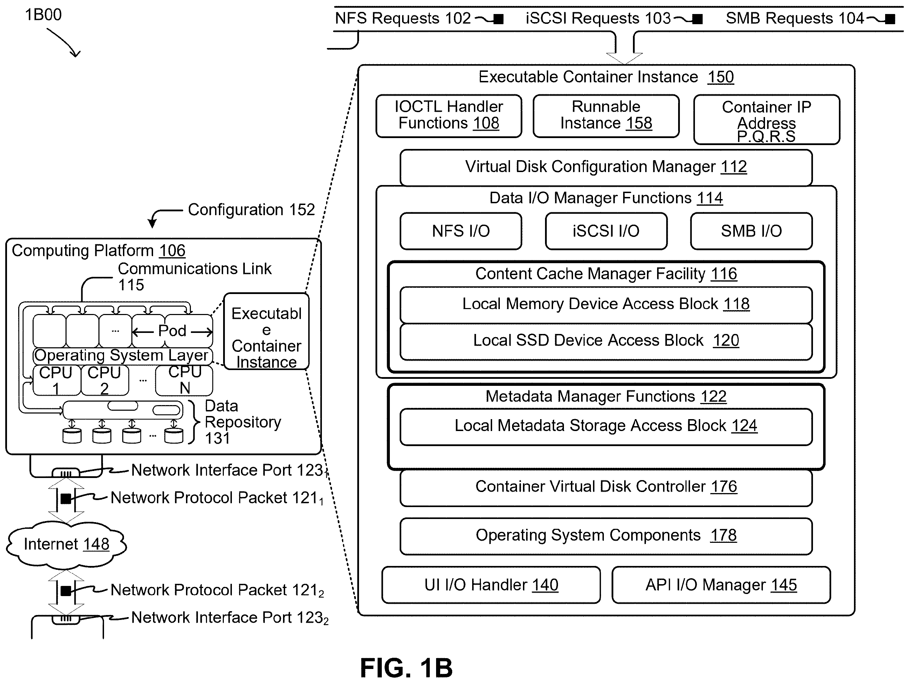

FIG. 1B depicts a block diagram illustrating another virtualization system architecture 1B00 configured to implement one or more aspects of the various embodiments. As shown in FIG. 1B, virtualization system architecture 1B00 includes a collection of interconnected components, including an executable container instance 150 in a configuration 152. Configuration 152 includes a computing platform 106 that supports an operating system layer (as shown) that performs addressing functions such as providing access to external requestors (e.g., user virtual machines or other processes) via an IP address (e.g., "P.Q.R.S", as shown). Providing access to external requestors can include implementing all or portions of a protocol specification (e.g., "http:") and possibly handling port-specific functions. In some embodiments, external requestors (e.g., user virtual machines or other processes) rely on the aforementioned addressing functions to access a virtualized controller for performing all data storage functions. Furthermore, when data input or output requests are received from a requestor running on a first node are received at the virtualized controller on that first node, then in the event that the requested data is located on a second node, the virtualized controller on the first node accesses the requested data by forwarding the request to the virtualized controller running at the second node. In some cases, a particular input or output request might be forwarded again (e.g., an additional or Nth time) to further nodes. As such, when responding to an input or output request, a first virtualized controller on the first node might communicate with a second virtualized controller on the second node, which second node has access to particular storage devices on the second node or, the virtualized controller on the first node can communicate directly with storage devices on the second node.

The operating system layer can perform port forwarding to any executable container (e.g., executable container instance 150). An executable container instance can be executed by a processor. Runnable portions of an executable container instance sometimes derive from an executable container image, which in turn might include all, or portions of any of, a Java archive repository (JAR) and/or its contents, and/or a script or scripts and/or a directory of scripts, and/or a virtual machine configuration, and can include any dependencies therefrom. In some cases, a configuration within an executable container might include an image comprising a minimum set of runnable code. Contents of larger libraries and/or code or data that would not be accessed during runtime of the executable container instance can be omitted from the larger library to form a smaller library composed of only the code or data that would be accessed during runtime of the executable container instance. In some cases, start-up time for an executable container instance can be much faster than start-up time for a virtual machine instance, at least inasmuch as the executable container image might be much smaller than a respective virtual machine instance. Furthermore, start-up time for an executable container instance can be much faster than start-up time for a virtual machine instance, at least inasmuch as the executable container image might have many fewer code and/or data initialization steps to perform than a respective virtual machine instance.

An executable container instance can serve as an instance of an application container or as a controller executable container. Any executable container of any sort can be rooted in a directory system and can be configured to be accessed by file system commands (e.g., "Is" or "Is -a", etc.). The executable container might optionally include operating system components 178, however such a separate set of operating system components need not be provided. As an alternative, an executable container can include runnable instance 158, which is built (e.g., through compilation and linking, or just-in-time compilation, etc.) to include all of the library and OS-like functions needed for execution of the runnable instance. In some cases, a runnable instance can be built with a virtual disk configuration manager, any of a variety of data IO management functions, etc. In some cases, a runnable instance includes code for, and access to, container virtual disk controller 176. Such a container virtual disk controller can perform any of the functions that the aforementioned CVM virtual disk controller 126 can perform, yet such a container virtual disk controller does not rely on a hypervisor or any particular operating system so as to perform its range of functions.

In some environments, multiple executable containers can be collocated and/or can share one or more contexts. For example, multiple executable containers that share access to a virtual disk can be assembled into a pod (e.g., a Kubernetes pod). Pods provide sharing mechanisms (e.g., when multiple executable containers are amalgamated into the scope of a pod) as well as isolation mechanisms (e.g., such that the namespace scope of one pod does not share the namespace scope of another pod).

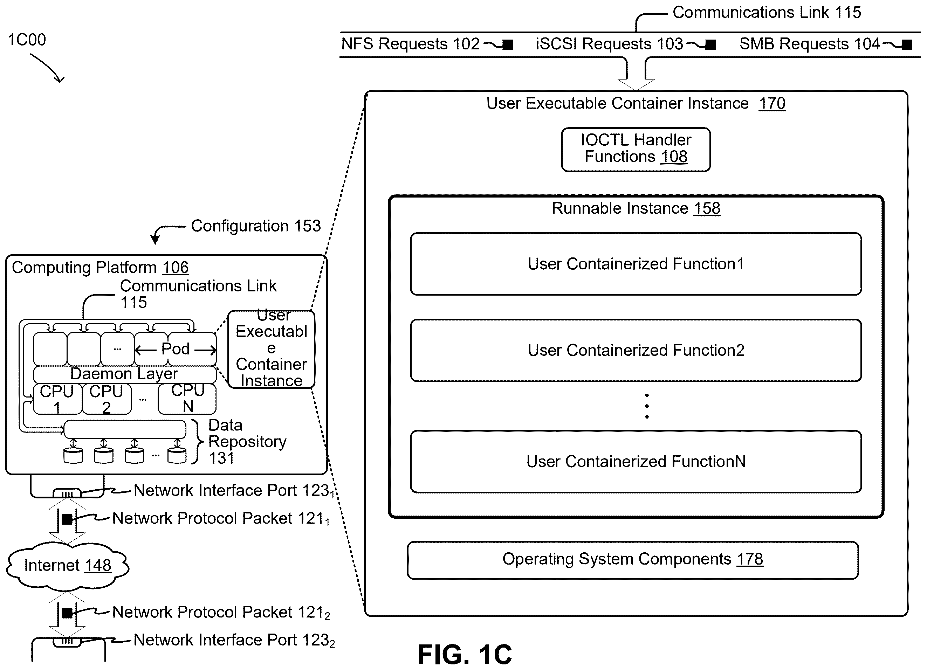

FIG. 1C is a block diagram illustrating virtualization system architecture 1C00 configured to implement one or more aspects of the various embodiments. As shown in FIG. 1C, virtualization system architecture 1C00 includes a collection of interconnected components, including a user executable container instance in configuration 153 that is further described as pertaining to user executable container instance 170. Configuration 153 includes a daemon layer (as shown) that performs certain functions of an operating system.

User executable container instance 170 comprises any number of user containerized functions (e.g., user containerized function1, user containerized function2, ..., user containerized functionN). Such user containerized functions can execute autonomously or can be interfaced with or wrapped in a runnable object to create a runnable instance (e.g., runnable instance 158). In some cases, the shown operating system components 178 comprise portions of an operating system, which portions are interfaced with or included in the runnable instance and/or any user containerized functions. In some embodiments of a daemon-assisted containerized architecture, computing platform 106 might or might not host operating system components other than operating system components 178. More specifically, the shown daemon might or might not host operating system components other than operating system components 178 of user executable container instance 170.

In some embodiments, the virtualization system architecture 1A00, 1B00, and/or 1C00 can be used in any combination to implement a distributed platform that contains multiple servers and/or nodes that manage multiple tiers of storage where the tiers of storage might be formed using the shown data repository 131 and/or any forms of network accessible storage. As such, the multiple tiers of storage can include storage that is accessible over communications link 115. Such network accessible storage can include cloud storage or networked storage (e.g., a SAN or storage area network). Unlike prior approaches, the disclosed embodiments permit local storage that is within or directly attached to the server or node to be managed as part of a storage pool. Such local storage can include any combinations of the aforementioned SSDs and/or HDDs and/or RAPMs and/or hybrid disk drives. The address spaces of a plurality of storage devices, including both local storage (e.g., using node-internal storage devices) and any forms of network-accessible storage, are collected to form a storage pool having a contiguous address space.

Significant performance advantages can be gained by allowing the virtualization system to access and utilize local (e.g., node-internal) storage. This is because I/O performance is typically much faster when performing access to local storage as compared to performing access to networked storage or cloud storage. This faster performance for locally attached storage can be increased even further by using certain types of optimized local storage devices such as SSDs or RAPMs, or hybrid HDDs, or other types of high-performance storage devices.

In some embodiments, each storage controller exports one or more block devices or NFS or iSCSI targets that appear as disks to user virtual machines or user executable containers. These disks are virtual since they are implemented by the software running inside the storage controllers. Thus, to the user virtual machines or user executable containers, the storage controllers appear to be exporting a clustered storage appliance that contains some disks. User data (including operating system components) in the user virtual machines resides on these virtual disks.

In some embodiments, any one or more of the aforementioned virtual disks can be structured from any one or more of the storage devices in the storage pool. In some embodiments, a virtual disk is a storage abstraction that is exposed by a controller virtual machine or container to be used by another virtual machine or container. In some embodiments, the virtual disk is exposed by operation of a storage protocol such as iSCSI or NFS or SMB. In some embodiments, a virtual disk is mountable. In some embodiments, a virtual disk is mounted as a virtual storage device.

In some embodiments, some or all of the servers or nodes run virtualization software. Such virtualization software might include a hypervisor (e.g., as shown in configuration 151) to manage the interactions between the underlying hardware and user virtual machines or containers that run client software.

Distinct from user virtual machines or user executable containers, a special controller virtual machine (e.g., as depicted by controller virtual machine instance 130) or as a special controller executable container is used to manage certain storage and I/O activities. Such a special controller virtual machine is sometimes referred to as a controller executable container, a service virtual machine (SVM), a service executable container, or a storage controller. In some embodiments, multiple storage controllers are hosted by multiple nodes. Such storage controllers coordinate within a computing system to form a computing cluster.

The storage controllers are not formed as part of specific implementations of hypervisors. Instead, the storage controllers run above hypervisors on the various nodes and work together to form a distributed system that manages all of the storage resources, including the locally attached storage, the networked storage, and the cloud storage. In example embodiments, the storage controllers run as special virtual machines-above the hypervisors-thus, the approach of using such special virtual machines can be used and implemented within any virtual machine architecture. Furthermore, the storage controllers can be used in conjunction with any hypervisor from any virtualization vendor and/or implemented using any combinations or variations of the aforementioned executable containers in conjunction with any host operating system components.

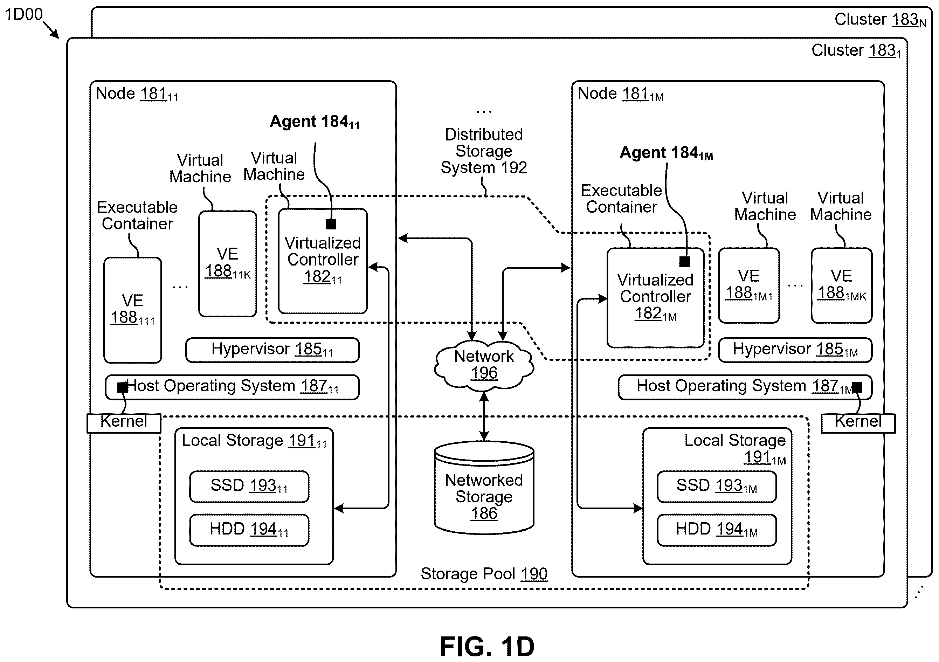

FIG. 1D is a block diagram illustrating virtualization system architecture 1D00 configured to implement one or more aspects of the various embodiments. As shown in FIG. 1D, virtualization system architecture 1D00 includes a distributed virtualization system that includes multiple clusters (e.g., cluster 183₁, ..., cluster 183_{N}) comprising multiple nodes that have multiple tiers of storage in a storage pool. Representative nodes (e.g., node 181₁₁, ..., node 181_{1M}) and storage pool 190 associated with cluster 183₁ are shown. Each node can be associated with one server, multiple servers, or portions of a server. The nodes can be associated (e.g., logically and/or physically) with the clusters. As shown, the multiple tiers of storage include storage that is accessible through a network 196, such as a networked storage 186 (e.g., a storage area network or SAN, network attached storage or NAS, etc.). The multiple tiers of storage further include instances of local storage (e.g., local storage 191₁₁, ..., local storage 191_{1M}). For example, the local storage can be within or directly attached to a server and/or appliance associated with the nodes. Such local storage can include solid state drives (SSD 193₁₁, ..., SSD 193_{1M}), hard disk drives (HDD 194₁₁, ..., HDD 194_{1M}), and/or other storage devices.

As shown, any of the nodes of the distributed virtualization system can implement one or more user virtualized entities (e.g., VE 188¹¹¹, ..., VE 188^{11K}, ..., VE 188^{1M1}, ..., VE 188^{1MK}), such as virtual machines (VMs) and/or executable containers. The VMs can be characterized as software-based computing "machines" implemented in a container-based or hypervisor-assisted virtualization environment that emulates the underlying hardware resources (e.g., CPU, memory, etc.) of the nodes. For example, multiple VMs can operate on one physical machine (e.g., node host computer) running a single host operating system (e.g., host operating system 187¹¹, ..., host operating system 187^{1M}), while the VMs run multiple applications on various respective guest operating systems. Such flexibility can be facilitated at least in part by a hypervisor (e.g., hypervisor 185¹¹, ..., hypervisor 185^{1M}), which hypervisor is logically located between the various guest operating systems of the VMs and the host operating system of the physical infrastructure (e.g., node).

As an alternative, executable containers can be implemented at the nodes in an operating system-based virtualization environment or in a containerized virtualization environment. The executable containers are implemented at the nodes in an operating system virtualization environment or container virtualization environment. The executable containers can include groups of processes and/or resources (e.g., memory, CPU, disk, etc.) that are isolated from the node host computer and other containers. Such executable containers directly interface with the kernel of the host operating system (e.g., host operating system 187₁₁, ..., host operating system 187_{1M}) without, in most cases, a hypervisor layer. This lightweight implementation can facilitate efficient distribution of certain software components, such as applications or services (e.g., micro-services). Any node of a distributed virtualization system can implement both a hypervisor-assisted virtualization environment and a container virtualization environment for various purposes. Also, any node of a distributed virtualization system can implement any one or more types of the foregoing virtualized controllers so as to facilitate access to storage pool 190 by the VMs and/or the executable containers.

Multiple instances of such virtualized controllers can coordinate within a cluster to form the distributed storage system 192 which can, among other operations, manage the storage pool 190. This architecture further facilitates efficient scaling in multiple dimensions (e.g., in a dimension of computing power, in a dimension of storage space, in a dimension of network bandwidth, etc.).

In some embodiments, a particularly configured instance of a virtual machine at a given node can be used as a virtualized controller in a hypervisor-assisted virtualization environment to manage storage and I/O (input/output or IO) activities of any number or form of virtualized entities. For example, the virtualized entities at node 181₁₁ can interface with a controller virtual machine (e.g., virtualized controller 18211) through hypervisor 185₁₁ to access data of storage pool 190. In such cases, the controller virtual machine is not formed as part of specific implementations of a given hypervisor. Instead, the controller virtual machine can run as a virtual machine above the hypervisor at the various node host computers. When the controller virtual machines run above the hypervisors, varying virtual machine architectures and/or hypervisors can operate with the distributed storage system 192. For example, a hypervisor at one node in the distributed storage system 192 might correspond to software from a first vendor, and a hypervisor at another node in the distributed storage system 192 might correspond to a second software vendor. As another virtualized controller implementation example, executable containers can be used to implement a virtualized controller (e.g., virtualized controller 182_{1M}) in an operating system virtualization environment at a given node. In this case, for example, the virtualized entities at node 181_{1M} can access the storage pool 190 by interfacing with a controller container (e.g., virtualized controller 182_{1M}) through hypervisor 185_{1M} and/or the kernel of host operating system 187_{1M}.

In some embodiments, one or more instances of an agent can be implemented in the distributed storage system 192 to facilitate the herein disclosed techniques. Specifically, agent 184₁₁ can be implemented in the virtualized controller 182₁₁, and agent 184_{1M} can be implemented in the virtualized controller 182_{1M}. Such instances of the virtualized controller can be implemented in any node in any cluster. Actions taken by one or more instances of the virtualized controller can apply to a node (or between nodes), and/or to a cluster (or between clusters), and/or between any resources or subsystems accessible by the virtualized controller or the agents.

### Exemplary Computing System

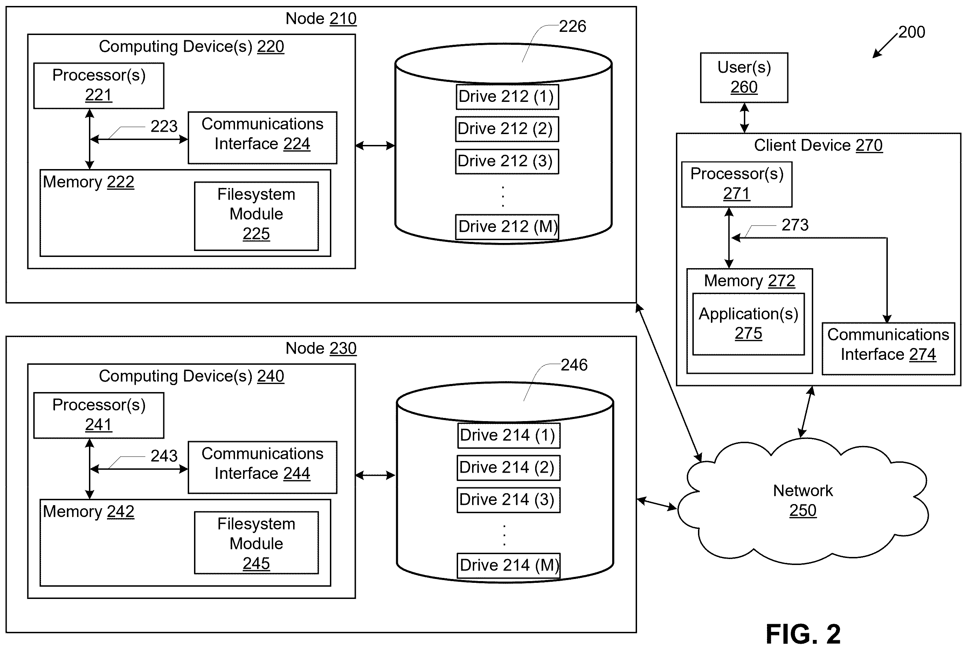

FIG. 2 is a block diagram illustrating a computing system 200 configured to implement one or more aspects of the various embodiments. As shown, computing system 200 includes, without limitation, a node 210, a node 230, a client device 270, a network 250, and one or more user(s) 260. Node 210 includes, without limitation, one or more computing devices 220 and storage 226. Computing device 220 includes, without limitation, one or more processors 221, memory 222, a bus 223, and a communications interface 224. Memory 222 stores, without limitation, a filesystem module 225. Storage 226 includes, without limitation, one or more drives 212 (1)-(M). Node 230 includes, without limitation, one or more computing devices 240 and storage 246. Computing device 240 includes, without limitation, one or more processors 241, memory 242, a bus 243, and a communications interface 244. Memory 242 stores, without limitation, a filesystem module 245. Storage 246 includes, without limitation, one or more drives 214(1)-(M). Client device 270 includes, without limitation, one or more processors 271, memory 272, a bus 273, and a communications interface 274. Memory 272 stores, without limitation, one or more applications 275.

Computing system 200 illustrates a computer cluster with one or more nodes, such as node 210 and node 230, connected to network 250. User(s) 260 of computing system 200 can use a client device 270 to connect to the computer cluster via network 250. In the context of this disclosure, the computing elements shown in computing system 200 can correspond to a physical computing system (e.g., a system in a data center) or can include a virtual computing instance. In various embodiments, computing system 200 and/or the elements of computing system 200 can be included in any of the virtualization system architectures shown in FIGs. 1A-1D.

Each of the one or more processors 221, 241, and/or 271 can be any suitable processors implemented as a central processing unit (CPU), a graphics processing unit (GPU), an application-specific integrated circuit (ASIC), a field programmable gate array (FPGA), an artificial intelligence (AI) accelerator, any other type of processor, or a combination of different processors, such as a CPU configured to operate in conjunction with a GPU. In general, one or more processors 221, 241, and/or 271 can be any technically feasible hardware unit capable of processing data and/or executing software applications.

Each of memories 222, 242, and/or 272 can include, without limitation, one or more random-access memory (RAM) modules, flash memory units, any other type of memory unit, or a combination of different memory types. The one or more processors 221, 241, and/or 271 are configured to read data from and write data to respective memories 222, 242, and/or 272. Memories 222, 242, and/or 272 includes various software programs that include one or more instructions that can be executed by the respective one or more processors 221, 241, and/or 271 and application data associated with the software programs.

Each of buses 223, 243, and/or 273 interconnect the subsystems and devices within the corresponding device 220, 240 and/or 270. For example, bus 223 includes an interface provided by computing device 220 that allows filesystem module 225 to communicate with storage 226 within node 210.

Each of communications interfaces 224, 244, and/or 274 includes any technically feasible hardware and/or software allowing respective devices 220, 240, and/or 270 to communicate with external devices, such as storage 226 or 246, network 250, and/or the like. Each of communications interfaces 224, 244, and/or 274 can include one or more input/output interfaces, one or more network interfaces, and/or the like.

Storage 226 and/or 246 includes non-volatile storage for applications and data. Storage 226 and/or 246 can include, without limitation, one or more fixed or removable drives 212(1)-(M) and/or 214(1)-(M). Drives 212(1)-(M) and/or 214(1)-(M) can be any type of storage device, such as *HDDs,* SSD, NVMEs, vDisks, flash memory devices, and/or other magnetic, optical, and/or solid-state storage devices.

Network 250 provides communications between client device 270 and computing device(s) 220, 240 in node 210 and/or node 230. Network 250 can include any technically feasible networks, such as one or more wired, wireless, or cellular networks, one or more local (e.g., an Ethernet) or wide area networks (e.g., the internet), and/or any combination thereof.

User(s) 260 refers to an individual or entity that interacts with a client device 270 to access various functionalities or services provided for user(s) 260, such as the services provided by application(s) 275.

Client device 270 can be any computing device, such as a smartphone, tablet, or computer. Client device 270 is configured to respond to inputs from user(s) 260, process requests, and deliver outputs accordingly.

Application(s) 275 executed on client device 270 support the computing needs of the one or more users 260. Application 275 allows user(s) 260 to perform one or more computing tasks to use one or more nodes in the cluster. For example, application 275 can send a write request to node 210 or 230 in order to write a data block in the storage of the cluster (e.g., in storage 226 or 246). Further, application 275 can send a read request to node 210 or 230 in order to retrieve a data block from the storage of the cluster.

When executed by one or more processors 221, filesystem module 225 receives requests from the one or more applications 275 running on a client device 270 or from a filesystem module (e.g., filesystem module 245) of another node in the cluster. For example, the requests can include, without limitation, read and/or write requests.

When filesystem module 225 receives a read request from the one or more applications 275, filesystem module 225 retrieves the requested data blocks stored in storage 226 and returns the requested data blocks to the corresponding application 275. When filesystem module 225 receives a write request, filesystem module 225 first writes a copy of the data blocks in the write request in any of drives 212(1)-(M) of storage 226. Filesystem module 225 then retrieves a cluster replication factor (e.g. cluster replication factor N) and sends write requests to the filesystem modules of the other nodes in the cluster (e.g. N-1 other nodes), such as filesystem module 245, to store replicas of the data blocks in the corresponding local storage of each node.

When a node in the cluster fails, filesystem module 225 detects the node failure and decrements the cluster replication factor. For example, by detecting the first node failure, filesystem module 225 decrements a cluster replication factor of N to a replication factor of N-1. Filesystem module 225 detects a node failure by periodically verifying whether the other N-1 nodes of the cluster are operational, responding to message from filesystem module 225, and/or any other feasible technique.

After the cluster replication factor has been decremented due to a node failure, when a new write request is received, filesystem module 225 writes the data blocks of the write request in storage 226 and sends the write requests to the filesystem modules of the other nodes in the cluster (e.g. N-2 other nodes), such as filesystem module 245 to write a copy of the data blocks in the write request in the corresponding local storage of each node. By decrementing the cluster replication factor when a node failure occurs, filesystem module 225 does not attempt to rebuild the data stored on the failed node because the new replication factor (e.g., the decremented cluster replication factor) is satisfied without having to store additional replicas. In addition, filesystem module 225 is also able to continue to receive and process write requests without pause because filesystem module 225 knows the data stored in the cluster meets the requirements of the decremented cluster replication factor. Filesystem module 225 can detect a second or more node failures and in response, decrement the cluster replication factor accordingly.

When a new node is available in the cluster (e.g., when a failed node becomes active again or a new node is added), filesystem module 225 detects the new node and increments the cluster replication factor. Filesystem module 225 detects the new node by periodically verifying the number of operational nodes in the cluster. Following the increment to the cluster replication factor, filesystem module 225 sends new write requests to the filesystem module of the new node to request the filesystem module of the new node to replicate the data blocks in the storage 226.

When any of the drives in node 210, such as any of drives 212(1)-(M) fails, filesystem module 225 detects the drive failure by any feasible technique. Filesystem module 225 then rebuilds a complete replica of the data blocks previously stored on the failed drive on one or more available drives of the node 210 from the replicas in other nodes.

When executed by one or more processors 241, filesystem module 245 receives requests from the one or more applications 275 running on a client device 270 or from a filesystem module (e.g., filesystem module 225) of another node in the cluster. For example, the requests can include, without limitation, read and/or write requests.

When filesystem module 245 receives a read request from the one or more applications 275, filesystem module 245 retrieves the requested data blocks stored in storage 246 and returns the requested data blocks to the corresponding application 275. When filesystem module 245 receives a write request, filesystem module 245 first writes a copy of the data blocks in the write request in any of drives 214(1)-(M) of storage 246. Filesystem module 245 then retrieves a cluster replication factor (e.g. cluster replication factor N) and sends write requests to the filesystem modules of the other nodes in the cluster (e.g. N-1 other nodes), such as filesystem module 225, to store replicas of the data blocks in the corresponding local storage of each node.

When a node in the cluster fails, filesystem module 245 detects the node failure and decrements the cluster replication factor. For example, by detecting the first node failure, filesystem module 245 decrements the cluster replication factor of N to a replication factor of N-1. Filesystem module 245 detects a node failure by periodically verifying whether the other N-1 nodes of the cluster are operational, responding to message from filesystem module 245, and/or any other feasible technique

After the cluster replication factor has been decremented due to a node failure, when a new write request is received, filesystem module 245 writes the data blocks of the write request in storage 246 and sends the write requests to the filesystem modules of the other nodes in the cluster (e.g. N-2 other nodes), such as filesystem module 225 to write a copy of the data blocks in the write request in the corresponding local storage of each node. By decrementing the cluster replication factor when a node failure occurs, filesystem module 245 does not attempt to rebuild the data stored on the failed node because the new replication factor (e.g., the decremented cluster replication factor) is satisfied without having to store additional replicas. In addition, filesystem module 245 is also able to continue to receive and process write requests without pause because filesystem module 245 knows the data stored in the cluster meets the requirements of the decremented cluster replication factor. Filesystem module 245 can detect a second or more node failures and in response, decrement the cluster replication factor accordingly.

When a new node is available in the cluster (e.g., when a failed node becomes active again or a new node is added), filesystem module 245 detects the new node and increments the cluster replication factor. Filesystem module 245 detects the new node by periodically verifying the number of operational nodes in the cluster. Following the increment to the cluster replication factor, filesystem module 245, sends new write requests to the filesystem module of the new node to request the filesystem module of the new node to replicate the data blocks in the storage 246.

When any of the drives in node 230, such as any of drives 214(1)-(M) fails, filesystem module 245 detects the drive failure by any feasible technique. Filesystem module 245 then rebuilds a complete replica of the data blocks previously stored on the failed drive on one or more available drives of the node 210 from the replicas in other nodes.

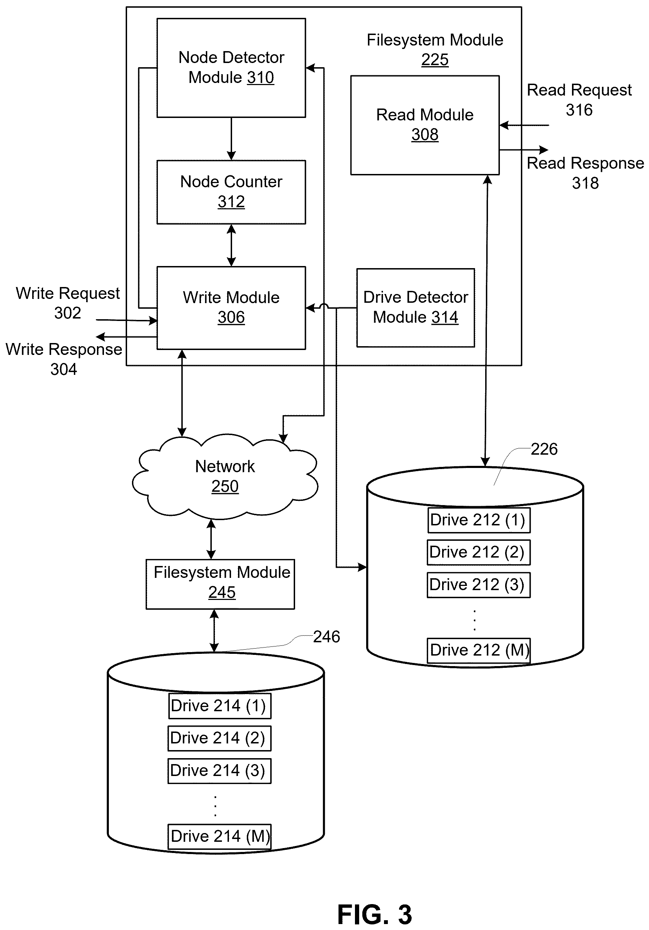

FIG. 3 is a more detailed illustration of filesystem module 225 of FIG. 2, according to various embodiments. As shown, filesystem module 225 includes, without limitation, a write module 306, a read module 308, a node detector module 310, and a node counter 312. Write module 306 receives, without limitation, a write request 302 and generates, without limitation, a write response 304. Read module 308 receives, without limitation, a read request 316 and generates, without limitation, a read response 318.

In operation, read module 308 receives read request 316 from a first application 275 of the one or more applications 275 or from a filesystem module of another node. For example, read request 316 could be a request to retrieve data on behalf of first application 275 in the cluster. As another example, read request 316 could be a request from the another filesystem module to retrieve a replica of a data block stored by the node, such as when rebuilding a failed drive. Read module 308 processes read request 316 to identify one or more requested data blocks. Read module 308 can retrieve the requested data block(s) from drives 212(1)-(M) of storage 226 where the requested data block(s) are stored. Read module 308 uses any feasible technique to retrieve the requested data blocks. For example, read module 308 can access one or more metadata records (not shown) and use the metadata records to identify the drive 212 and location on the drive 212 where a particular requested data block is stored. Once the requested data block(s) are retrieved, read module 308 generates a read response 318 that includes the retrieved data block(s). Read module 308 then returns read response 318 to the requesting first application 275.

In operation, write module 306 receives write request 302 from a first application 275 of the one or more applications 275 running on a client device 270 or from another filesystem module (e.g., filesystem module 245) of another node in the cluster. For example, write request 302 could be a request to store data on behalf of first application 275 in the cluster. As another example, write request 302 could be a request from the another filesystem module to store a replica of a data block stored in the another node. Write module 306 processes write request 302 to identify the data blocks that are to be stored. Write module 306 then writes a copy of each of the data blocks in any of the drives 212(1)-(M) of storage 226. For example, write module 306 can access the one or more metadata records to identify unused storage space on any of drives 212(1)-(M). Write module 306 then generates a write response 304 and returns write response 304 to first application 275.

When write request 302 includes a request from first application 275 to store a data block, write module 306 performs steps to make replicas of the data block. Write module 306 first accesses node counter 312 to determine the replication factor for the cluster. For example, write module 306 can identify how many replicas of the data block should be stored in the cluster based on a value of node counter 312. Write module 306 then sends a corresponding write request 302 to each of the other filesystem modules (e.g., filesystem module 245) of the other nodes in the cluster (e.g. N-1 other nodes when the node counter 312 has a value of N) to store a replica of the data block.

Node counter 312 indicates a number of active nodes in the cluster. When the cluster replication factor is also the same as the number of active nodes in the cluster, node counter 312 indicates how many replicas of a data block in a write request 302 are to be maintained in the cluster. Node counter 312 is incremented as new nodes are detected in the cluster by node detector module 310 and decremented when node detector module 310 detects node failures in the cluster.

Node detector module 310 determines how many nodes are available in the cluster at any time. Node detector module 310 uses any feasible technique to identify failed nodes or added nodes. In some embodiments, each node of the cluster, such as node 210, writes an indicator to a configuration file (not shown) that is shared with the other node detector modules 310 of the other nodes in the cluster. Node detector module 310 reads the shared configuration file and determines whether a node is added to the cluster or is not available anymore due to a node failure. When node detector module 310 determines a node that had previously written an indicator to the configuration file but is no longer writing an indicator to the configure file, node detector module 310 determines that, such a node has failed and decrements node counter 312. On the other hand, node detector module 310 determines that a new node that had not previously written an indicator to the configuration file or a previous node that had stopped writing an indicator to the configuration file is now writing an indicator to the configure file, to determine that a new node is available in the cluster (e.g., when a failed node becomes active again or a new node is added). In response, node detector module 310 increments node counter 312. In some embodiments, node detector module 310 sends periodic heartbeat messages through network to the node detector modules 310 of the other nodes in the cluster to let the other node detector modules 310 know that node 210 is still active. When node detector module 310 does not receive a heartbeat message from node detector module 310 of a previously active node after a predetermined duration, node detector module 310 determines that the previously active node has failed and decrements node counter 312. When node detector module 310 receives a heartbeat message from node detector module 310 of a new node that was not previously active or receives a heartbeat message from node detector module 310 of a previously active node that stopped sending heartbeat messages, node detector module 310 determines that the new node or the previously active node is added to the cluster and increments node counter 312.

When node counter 312 is incremented indicating that a new node is available in the cluster and the cluster replication factor is incremented, filesystem module 225 further assists in the creating an additional replica of each of the data blocks stored in the cluster. For example, filesystem module 225 can send copies of one or more data blocks stored in drives 212(1)-(M) to the new node so that a replica of each of those one or more data blocks is stored in the drives of the new node.

Drive detector module 314 detects whether a drive failure has occurred in any of drives 212(1)-(M). Drive detector module 314 can detect a drive failure using any feasible technique. For example, drive detector module 314 can use consistency checks and parity, error logging, heartbeat mechanism and/or monitoring techniques to detect a drive failure. When a drive failure is detected, drive detector module 314 informs write module 306 to rebuild copies of the data previously stored in the failed drive 212 in any of the healthy drives 212. For example, write module 306 can send a read request 316 to filesystem module (e.g., filesystem module 245) of another node to request a copy of a data block previously stored on the failed drive 212.

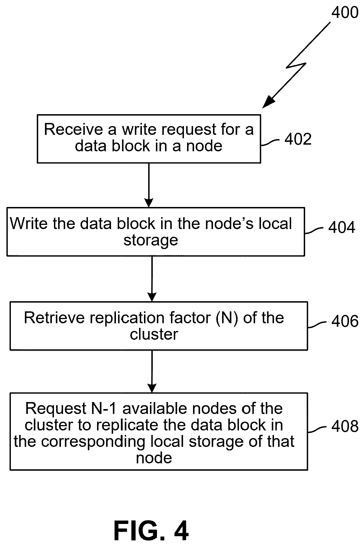

FIG. 4 is a flow diagram of method steps for handling a write request in a cluster, according to various embodiments. Although the method steps are described in conjunction with FIGs. 1-3, persons skilled in the art will understand that any system configured to perform the method steps, in any order, falls within the scope of the present invention. For example, in some embodiments, step 406 can be performed before step 404.

As shown in FIG. 4, a method 400 begins at step 402, where a filesystem module, such as filesystem module 225 receives write request 302 for a data block in a node. The filesystem module receives write request 302 from a first application 275 of the one or more applications 275 running on a client device 270 or from another filesystem module (e.g., filesystem module 245) of another node in the cluster.

At step 404, write module 306 writes the data block in the node's local storage. Write module 306 first processes write request 302 to identify the data block to be stored. Write module 306 then writes a copy of the data block in any of the drives 212(1)-(M) of storage 226. For example, write module 306 can access one or more metadata records to identify unused storage space on any of drives 212(1)-(M). Write module 306 then generates a write response 304 and returns write response 304 to first application 275 of the one or more applications 275 running on a client device 270 or to another filesystem module (e.g., filesystem module 245) of another node in the cluster.

At step 406, write module 306 retrieves replication factor (N) of the cluster. Write module 306 accesses node counter 312 to determine the replication factor for the cluster. For example, write module 306 can identify how many replicas of the data block should be stored in the cluster based on a value of node counter 312.

At step 408, write module 306 requests N-1 available nodes of the cluster to replicate the data block in the corresponding local storage of that node. After write module 306 retrieves the replication factor of the cluster, write module 306 sends a corresponding write request 302 to each of the other filesystem modules (e.g., filesystem module 245) of the other nodes in the cluster to store a replica of the data block. In total, write module 306 makes N-1 requests, one for each node, to have the N-1 replicas stored.

As discussed above and further emphasized here, Figure 4 is merely an example which should not unduly limit the scope of the claims. One of ordinary skill in the art would recognize many variations, alternatives, and modifications. In some embodiments, the write request 302 received during step 402 includes a plurality of data blocks to be written. In such cases, write module 306 repeats steps 404 and 408 for each data block in the write request.

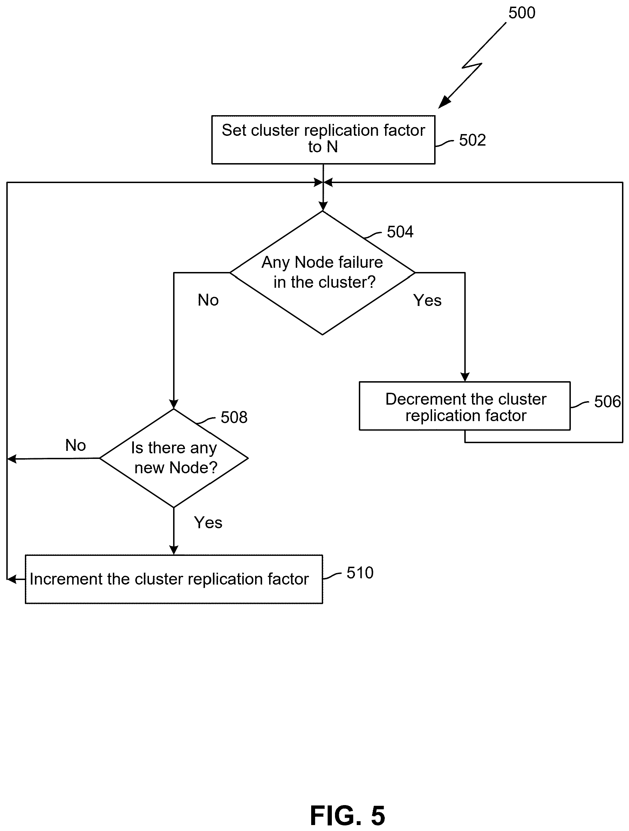

FIG. 5 is a flow diagram of method steps for handling a node failure in a cluster, according to various embodiments. Although the method steps are described in conjunction with FIGs. 1-3, persons skilled in the art will understand that any system configured to perform the method steps, in any order, falls within the scope of the present invention.

As shown in FIG. 5, a method 500 begins at step 502, where node detector module 310 sets cluster replication factor to N. Node detector module 310 determines how many nodes are available in the cluster at any time and sets node counter 312. Node counter 312 indicates how many replicas of a data block in a write request 302 are to be maintained in the cluster.

At step 504, node detector module 310 determines whether any node failure has occured in the cluster. Node detector module 310 uses any feasible technique to identify failed nodes or added nodes. In some embodiments, each node of the cluster, such as node 210, writes an indicator to a configuration file (not shown) that is shared with the other node detector modules 310 of the other nodes in the cluster. Node detector module 310 reads the shared configuration file and determines whether a node is no longer available. When node detector module 310 determines a node that had previously written an indicator to the configuration file but is no longer writing an indicator to the configure file, node detector module 310 determines that the node has failed.

In some embodiments, node detector module 310 sends periodic heartbeat messages through network to node detector modules 310 of the other nodes in the cluster to let the other node detector modules 310 know that node 210 is still active. When node detector module 310 does not receive a heartbeat message from the node detector module 310 of a previously active node after a predetermined duration, node detector module 310 determines that the previously active node has failed.

When node detector module 310 detects a node failure, method 500 moves to step 506. When node detector module 310 does not detect a node failure, method 500 moves to step 508.

At step 506, node detector module 310 decrements the cluster replication factor. This reduces the replication factor for further write requests received by write module 306. In some embodiments, node detector module 310 decrements the cluster replication factor by decrementing node counter 312. After completing step 506, method 500 returns to step 504.

At step 508, node detector module 310 determines whether there is any new node in the cluster. In some embodiments, each node of the cluster, such as node 210, writes an indicator to a configuration file (not shown) that is shared with the other node detector modules 310 of the other nodes in the cluster. Node detector module 310 reads the shared configuration file and determines whether a node is added to the cluster. Node detector module 310 determines that a new node that had not previously written an indicator to the configuration file or a previous node that had stopped writing an indicator to the configuration file is now writing an indicator to the configure file, to determine that a new node is available in the cluster (e.g., when a failed node becomes active again or a new node is added).

In some embodiments, when node detector module 310 receives a heartbeat message from node detector module 310 of a new node that was not previously active or receives a heartbeat message from node detector module 310 of a previously active node that stopped sending heartbeat messages, node detector module 310 determines that the new node or the previously active node is added to the cluster.

When node detector module 310 determines that a node is added to the cluster, method 500 moves to step 510 to increment the cluster replication factor. On the other hand, when node detector module 310 doesn't detect that a node is added to the cluster, method 500 returns to step 504.

At step 510, node detector module 310 increments the cluster replication factor. This increases the replication factor for further write requests received by write module 306. In some embodiments, node detector module 310 increments the cluster replication factor by incrementing node counter 312. After completing step 510, method 500 returns to step 504.

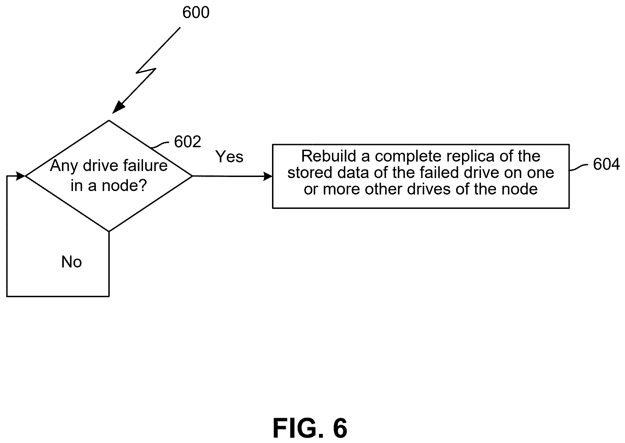

FIG. 6 is a flow diagram of method steps for handling a disk failure in a cluster, according to various embodiments. Although the method steps are described in conjunction with FIGs. 1-3, persons skilled in the art will understand that any system configured to perform the method steps, in any order, falls within the scope of the present invention.

As shown in FIG. 6, a method 600 begins at step 602, where drive detector module 314 determines whether a drive failure has occurred in any of drives 212(1)-(M). Drive detector module 314 can determine a drive failure using any feasible technique. For example, drive detector module 314 can use consistency checks and parity, error logging, heartbeat mechanism and/or monitoring techniques to detect a drive failure. When drive detector module 314 determines that any of drives 212(1)-(M) has failed, method 600 moves to step 604. On the other hand, when drive detector module 314 can't determine that any of drives 212(1)-(M) has failed, method 600 returns to step 602.

At step 604, filesystem module 225 rebuilds a complete replica of the stored data of the failed drive on one or more other drives of the node. When a drive failure is detected, drive detector module 314 informs write module 306 to rebuild copies of the data previously stored in the failed drive 212 in any of the healthy drives 212. For example, write module 306 can send a read request 316 to filesystem module (e.g., filesystem module 245) of another node to request a copy of a data block previously stored on the failed drive 212.

In sum, the disclosed techniques support the simultaneous failure of both a node and a disk in an N node cluster, while still handling write requests without interruption. The disclosed techniques use an adaptive replication factor for the cluster. In a cluster with N nodes, the disclosed techniques include using a replication factor of N by storing replicas of each block of data from each node in each of the other N-1 nodes (N copies of each block of data). When a node in the cluster fails, the other N-1 nodes detect the node failure and adaptively change the replication factor for the cluster from N to N-1. The N-1 remaining nodes can still handle writes by creating N-2 replicas instead of N-1 and no attempt is made to rebuild the data stored at the lost Nth node. The replication factor remains at N-1 until the failed node becomes active again or is replaced at which time the replication factor is again set to N and the Nth node is rebuilt using the replicas stored on the N-1 nodes that did not fail. When a drive failure is detected, the drive is rebuilt on the other drives of the same node from the replicas of the data stored in the cluster.

At least one technical advantage of the disclosed techniques relative to the prior art is that, with the disclosed techniques an N-node cluster is able to handle both a node and a drive failure without a need to have spare capacity equal to an entire node. In addition, the disclosed techniques retain the ability to continuously handle write requests when a node of the cluster fails. These technical advantages provide one or more technological improvements over prior art approaches.
1. In some embodiments, one or more computer program products store program instructions that, when executed by one or more processors associated with a first node in an N-node cluster, cause the one or more processors to perform a method comprising setting a replication factor for the cluster to N, and in response to detecting a failure of a second node in the cluster, setting the replication factor for the cluster to N-1.
**2.** The one or more computer program products of clause 1, wherein setting the replication factor to N-1 comprises setting the replication factor to a number of active nodes in the cluster.
3. The one or more computer program products of clauses 1 or 2, wherein setting the replication factor to N-1 comprises setting a node counter of the cluster to N-1.
4. The one or more computer program products of any of clauses 1-3, further comprising, in response to detecting the failure of the second node, continuing to accept read and write requests without pause.
5. The one or more computer program products of any of clauses 1-4, wherein N equals 3.
6. The one or more computer program products of any of clauses 1-5, wherein the method further comprises while the replication factor is set to N receiving a first write request with first data, and transmitting a respective replica of the first data to each of the other N-1 nodes in the cluster.
7. The one or more computer program products of any of clauses 1-6, wherein the method further comprises while the replication factor is set to N-1 receiving a first write request with first data, and transmitting a respective replica of the first data to each of the other N-2 nodes still active in the cluster.
**8.** The one or more computer program products of any of clauses 1-7, wherein the method further comprises in response to detecting that the second node is again active or has been replaced by a new node, setting the replication factor for the cluster to N.
9. The one or more computer program products of any of clauses 1-8, wherein the method further comprises after setting the replication factor for the cluster to N, rebuilding Nth replicas of data stored in the cluster by transmitting the Nth replications to the second node or the new node.
10. The one or more computer program products of any of clauses 1-9, wherein rebuilding the Nth replicas comprises, transmitting an Nth replica of data from each write request received by the first node while the replication factor for the cluster was set to N-1.
11. The one or more computer program products of any of clauses 1-10, wherein detecting the failure of the second node comprises using a heartbeat mechanism.
12. The one or more computer program products of clause 1, wherein the method further comprises in response to the first node detecting failure of a first drive at the first node, storing copies of first data that was stored on the first drive using replicas of the first data stored in other nodes of the cluster.
13. In some embodiments, a computer-implemented method comprises setting, by a first node in an N-node cluster, a replication factor for the cluster to N, and in response to detecting a failure of a second node in the cluster, setting the replication factor for the cluster to N-1.
14. The computer-implemented method of clause 13, wherein setting the replication factor to N-1 comprises setting the replication factor to a number of active nodes in the cluster.
15. The computer-implemented method of clauses 13 or 14, wherein setting the replication factor to N-1 comprises setting a node counter of the cluster to N-1.
16. The computer-implemented method of any of clauses 13-15, wherein, in response to detecting the failure of the second node, continuing, by the first node, to accept read and write requests without pause.
17. The computer-implemented method of any of clauses 13-16, wherein N equals 3.
18. The computer-implemented method of any of clauses 13-17, further comprising, while the replication factor is set to N receiving, by the first node, a first write request with first data, and transmitting, by the first node, a respective replica of the first data to each of the other N-1 nodes in the cluster.
19. The computer-implemented method of any of clauses 13-18, further comprising, while the replication factor is set to N-1 receiving, by the first node, a first write request with first data, and transmitting, by the first node, a respective replica of the first data to each of the other N-2 nodes still active in the cluster.
20. The computer-implemented method of any of clauses 13-19, further comprising in response to detecting that the second node is again active or has been replaced by a new node, setting, by the first node, the replication factor for the cluster to N.
21. The computer-implemented method of any of clauses 13-20, further comprising after setting the replication factor for the cluster to N, rebuilding Nth replicas of data stored in the cluster by transmitting the Nth replications to the second node or the new node.
22. The computer-implemented method of any of clauses 13-21, wherein rebuilding the Nth replicas comprises, transmitting, by the first node, an Nth replica of data from each write request received by the first node while the replication factor for the cluster was set to N-1.
**23.** The computer-implemented method of any of clauses 13-22, wherein detecting the failure of the second node comprises using a heartbeat mechanism.
24. The computer-implemented method of any of clauses 13-23, further comprising in response to the first node detecting failure of a first drive at the first node, storing copies of first data that was stored on the first drive using replicas of the first data stored in other nodes of the cluster.
25. In some embodiments, a first node in an N-node cluster, the first node comprises memory storing instructions, and one or more processors coupled to the memory and, when executing the instructions, are configured to perform operations comprising setting a replication factor for the cluster to N, and in response to detecting a failure of a second node in the cluster, setting the replication factor for the cluster to N-1.
26. The first node of clause 25, wherein setting the replication factor to N-1 comprises setting the replication factor to a number of active nodes in the cluster.
27. The first node of clauses 25 or 26, wherein setting the replication factor to N-1 comprises setting a node counter of the cluster to N-1.
**28.** The first node of any of clauses 25-27, wherein the operations further comprise in response to detecting the failure of the second node, continuing to accept read and write requests without pause.
29. The first node of any of clauses 25-28, wherein N equals 3.
30. The first node of any of clauses 25-29, wherein the operations further comprise while the replication factor is set to N receiving a first write request with first data, and transmitting a respective replica of the first data to each of the other N-1 nodes in the cluster.
31. The first node of any of clauses 25-30, wherein the operations further comprise while the replication factor is set to N-1 receiving a first write request with first data, and transmitting a respective replica of the first data to each of the other N-2 nodes still active in the cluster.
32. The first node of any of clauses 25-31, wherein the operations further comprise in response to detecting that the second node is again active or has been replaced by a new node, setting the replication factor for the cluster to N.
33. The first node of any of clauses 25-32, wherein the operations further comprise after setting the replication factor for the cluster to N, rebuilding Nth replicas of data stored in the cluster by transmitting the Nth replications to the second node or the new node.
34. The first node of any of clauses 25-33, wherein rebuilding the Nth replicas comprises, transmitting, by the first node, an Nth replica of data from each write request received by the first node while the replication factor for the cluster was set to N-1.
35. The first node of any of clauses 25-34, wherein detecting the failure of the second node comprises using a heartbeat mechanism.
36. The first node of any of clauses 25-35, wherein the operations further comprise in response to the first node detecting failure of a first drive at the first node, storing copies of first data that was stored on the first drive using replicas of the first data stored in other nodes of the cluster.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. One or more computer program products storing program instructions that, when executed by one or more processors associated with a first node in an N-node cluster, cause the one or more processors to perform a method comprising:
setting a replication factor for the cluster to N; and
in response to detecting a failure of a second node in the cluster, setting the replication factor for the cluster to N-1.

2. The one or more computer program products of claim 1, wherein setting the replication factor to N-1 comprises setting the replication factor to a number of active nodes in the cluster.

3. The one or more computer program products of claim 1, wherein setting the replication factor to N-1 comprises setting a node counter of the cluster to N-1.

4. The one or more computer program products of claim 1, further comprising, in response to detecting the failure of the second node, continuing to accept read and write requests without pause.

5. The one or more computer program products of claim 1, wherein the method further comprises:
while the replication factor is set to N:
receiving a first write request with first data; and
transmitting a respective replica of the first data to each of the other N-1 nodes in the cluster; and
while the replication factor is set to N-1:
receiving a first write request with first data; and
transmitting a respective replica of the first data to each of the other N-2 nodes still active in the cluster.

6. The one or more computer program products of claim 1, wherein the method further comprises:
in response to detecting that the second node is again active or has been replaced by a new node, setting the replication factor for the cluster to N.

7. The one or more computer program products of claim 8, wherein the method further comprises:
after setting the replication factor for the cluster to N, rebuilding Nth replicas of data stored in the cluster by transmitting the Nth replications to the second node or the new node.

8. The one or more computer program products of claim 7, wherein rebuilding the Nth replicas comprises, transmitting an Nth replica of data from each write request received by the first node while the replication factor for the cluster was set to N-1.

9. The one or more computer program products of claim 1, wherein detecting the failure of the second node comprises using a heartbeat mechanism.

10. The one or more computer program products of claim 1, wherein the method further comprises in response to the first node detecting failure of a first drive at the first node, storing copies of first data that was stored on the first drive using replicas of the first data stored in other nodes of the cluster.

11. A computer-implemented method comprising:
setting, by a first node in an N-node cluster, a replication factor for the cluster to N; and
in response to detecting a failure of a second node in the cluster, setting the replication factor for the cluster to N-1.

12. The computer-implemented method of claim 11, wherein setting the replication factor to N-1 comprises setting the replication factor to a number of active nodes in the cluster.

13. The computer-implemented method of claim 11, wherein, in response to detecting the failure of the second node, continuing, by the first node, to accept read and write requests without pause.

14. The computer-implemented method of claim 11, further comprising:
while the replication factor is set to N:
receiving, by the first node, a first write request with first data; and
transmitting, by the first node, a respective replica of the first data to each of the other N-1 nodes in the cluster; and
while the replication factor is set to N-1:
receiving, by the first node, a first write request with first data; and
transmitting, by the first node, a respective replica of the first data to each of the other N-2 nodes still active in the cluster.

15. A first node in an N-node cluster, the first node comprising:
memory storing instructions; and
one or more processors coupled to the memory and, when executing the instructions, are configured to perform the method of any one of claims 11 to 14.
